# EUROPEAN PATENT APPLICATION

(11) **EP 3 148 152 A1**
(43) Date of publication of application: **29.03.2017**
(21) Application number: 15275204.4
(22) Date of filing: 22.09.2015
(51) Int. Cl.: H04L 29/06, H04W 12/02, H04L 29/08

(54) **CRYPTOGRAPHIC KEY DISTRIBUTION**

(71) Applicant: BAE Systems PLC, London SW1Y 5AD (GB)
(72) Inventor: The designation of the inventor has not yet been filed
(74) Representative: BAE SYSTEMS plc Group IP Department

(57) **Abstract**

Disclosed is a cryptographic key distribution method and apparatus for installing a cryptographic key in an ECU (111). The method comprises: establishing a first communication link between the ECU (111) and a key source (128); sending, via the first link, a first cryptographic key (K1) from the key source (128) to the ECU (111); establishing a second communication link between the key source (128) and a key manager (120); sending, via the second link, the first key (K1) from the key source (128) to the key manager (120); encrypting, by the key manager (120), using the first key (K1), a second cryptographic key (F3, F7); sending, by the key manager (120), to the ECU (111), the encrypted second key (F3, F7); and decrypting, by the ECU (111), using the first key (K1), the encrypted second key (F3, F7), thereby providing the ECU (111) with the second key (F3, F7).

## Description

### FIELD OF THE INVENTION

The present invention relates to cryptographic key distribution method and systems for installing cryptographic keys in electronic control units, e.g. electronic control units on a vehicle.

### BACKGROUND

In recent decades cars and other systems have been fitted with an increasing number of interconnected digital electronic control units (ECUs), an approach that tends to provide benefits including reduced cabling, improved fuel efficiency, and increased functionality including features that can be soft enabled/disabled on different models.

Increased use of ECUs on vehicles has given rise to an increased risk of cyber-attacks targeting the ECUs. Such attacks may jeopardise the safety of people, and cause damage to the vehicle.

### SUMMARY OF THE INVENTION

The present inventors have realised that the impact of cyber-attacks on a vehicle can be reduced or eliminated by adding a security layer to the network of ECUs within a vehicle.

In a first aspect, the present invention provides a cryptographic key distribution method for installing a cryptographic key in an electronic control unit. The electronic control unit may be an electronic control unit of a vehicle. The method comprises: establishing a first secure communication link between the electronic control unit and a key source; sending, via the first secure communication link, a first cryptographic key from the key source to the electronic control unit; establishing a second secure communication link between the key source and a key management module; sending, via the second secure communication link, the first cryptographic key from the key source to the key management module; encrypting, by the key management module, using the first cryptographic key, a second cryptographic key; sending, by the key management module, to the electronic control unit, the encrypted second cryptographic key; and decrypting, by the electronic control unit, using the first cryptographic key, the encrypted second cryptographic key, thereby providing the electronic control unit with the second cryptographic key.

The method may further comprise: establishing a third secure communication link between a further electronic control unit and a further key source; sending, via the third secure communication link, a third cryptographic key from the further key source to the further electronic control unit; establishing a fourth secure communication link between the further key source and the key management module; sending, via the fourth secure communication link, the third cryptographic key from the key source module to the key management module; encrypting, by the key management module, using the third cryptographic key, the second cryptographic key; sending, by the key management module, to the further electronic control unit, the encrypted second cryptographic key; and decrypting, by the electronic control unit, using the third cryptographic key, the encrypted second cryptographic key, thereby providing the further electronic control unit with the second cryptographic key.

The method may further comprise encrypting, using the second cryptographic key, by the electronic control unit, a message; sending, by the electronic control unit, to the further electronic control unit, the encrypted message; and decrypting, by the further electronic control unit, the encrypted message to recover the message.

The second cryptographic key may be a private key. The method may further comprise: applying, using the second cryptographic key, by the electronic control unit, a digital signature to a message; sending, by the electronic control unit, to a further electronic control unit, the message with the digital signature applied thereto; and decrypting, by the further electronic control unit, using a public key corresponding to the private second cryptographic key, the digital signature so as to verify the message.

The method may further comprise: applying, using its second cryptographic key, by the electronic control unit, an integrity check to a message; sending, by the electronic control unit, to a further electronic control unit, the message with the integrity check applied thereto; and verifying (or otherwise), by the further electronic control unit, using its second cryptographic key, the integrity check so as to verify (or otherwise) the message.

The method may further comprise applying, by the key management module, using its first cryptographic key, to the second cryptographic key, an integrity check. The step of sending, by the key management module, to the electronic control unit, the encrypted second cryptographic key may comprise sending, by the key management module, to the electronic control unit, the encrypted second cryptographic key with the integrity check applied thereto. The method may further comprise verifying (or otherwise), by the electronic control unit, using its first cryptographic key, the integrity check so as to verify (or otherwise) the second cryptographic key.

The electronic control unit may be located on a vehicle. The electronic control unit may be is configured to control one or more electrical system or subsystems of the vehicle.

The second cryptographic key may be assigned only to a specific function performable by the electronic control unit in controlling the one or more electrical system or subsystems of the vehicle.

The key management module may be located on the vehicle.

The key source and the key management module may be connected via a one or more computer networks. Establishing the second secure communication link between the key source and the key management module may comprise performing an authentication and/or handshaking operation between the key source and the key management module via the one or more computer networks. The authentication and/or handshaking operation between the key source and the key management module may include using secret codes preferably known only to the key source and the key management module.

Establishing the first secure communication link between the electronic control unit and the key source, and sending, via the first secure communication link, the first cryptographic key from the key source to the electronic control unit may comprise: establishing a fifth secure communication link between the key source and an intermediate module; sending, via the fifth secure communication link, the first cryptographic key from the key source to the intermediate module; establishing a sixth secure communication link between the electronic control unit and the intermediate module; and sending, via the sixth secure communication link, the first cryptographic key from the intermediate module to the electronic control unit.

The electronic control unit and the intermediate module may be connected via a one or more computer networks. Establishing the sixth secure communication link between the electronic control unit and the intermediate module may comprise performing an authentication and/or handshaking operation between the electronic control unit and the intermediate module via the one or more computer networks. The authentication and/or handshaking operation between the electronic control unit and the intermediate module may include using secret codes preferably known only to the electronic control unit and the intermediate module.

The method may further comprise generating, by the key management module, the second cryptographic key.

The cryptographic key distribution method may further comprise sending, by the electronic control unit, to one or more authorisation modules, a key request message. The key request message may be sent via the key management module. The one or more authorisation modules may be remote from the electronic control unit and the key management module. In some aspects, the second cryptographic key is sent to the electronic control unit only if the one or more authorisation modules authorise the key request.

The vehicle may be a vehicle selected from the group of vehicles consisting of a bus, a lorry, a train, a ship, and an aircraft. The electronic control unit and/or the key management module may be located in a mechanical system, a building, or a plurality of buildings.

In a further aspect, the present invention comprises a cryptographic key distribution system comprising: an electronic control unit; a key source; and a key management module. The electronic control unit may be an electronic control unit of a vehicle. The electronic control unit and a key source are configured to establish a first secure communication link therebetween. The key source is configured to send, via the first secure communication link, a first cryptographic key to the electronic control unit. The key source and a key management module are configured to establish a second secure communication link therebetween. The key source is configured to send, via the second secure communication link, the first cryptographic key to the key management module. The key management module is configured to encrypt, using the first cryptographic key, a second cryptographic key. The key management module is configured to send, to the electronic control unit, the encrypted second cryptographic key. The electronic control unit is configured to decrypt, using the first cryptographic key, the encrypted second cryptographic key.

In a further aspect, the present invention provides a vehicle comprising: an electronic control unit, and a key management module. The electronic control unit is configured to receive, from a key source remote from the vehicle, a first cryptographic key via a first secure communication link established between the electronic control unit and the key source. The key management module is configured to receive, from the key source, the first cryptographic key via a second secure communication link established between the key management module and the key source. The key management module is configured to encrypt, using the first cryptographic key, a second cryptographic key. The key management module is configured to send, to the electronic control unit, the encrypted second cryptographic key. The electronic control unit is configured to decrypt, using the first cryptographic key, the encrypted second cryptographic key.

In a further aspect, the present invention provides a program or plurality of programs arranged such that when executed by a computer system or one or more processors it/they cause the computer system or the one or more processors to operate in accordance with the method of any of the above aspects.

In a further aspect, the present invention provides a machine readable storage medium storing a program or at least one of the plurality of programs according to the preceding aspect.

### BRIEF DESCRIPTION OF THE DRAWINGS

Figure 1 is a schematic illustration (not to scale) of an example system in which an embodiment of a method of key management is implemented;
Figure 2 is a schematic illustration (not to scale) showing further details of an ECU manufacturer;
Figure 3 is a schematic illustration (not to scale) showing further details of a manufacturer of a key management module of the system;
Figure 4 is a schematic illustration (not to scale) showing further details of the key management module;
Figure 5 is a schematic illustration (not to scale) showing further details of an ECU of the system; and
Figure 6 is process diagram showing certain steps of a key management process performable by the system.

### DETAILED DESCRIPTION

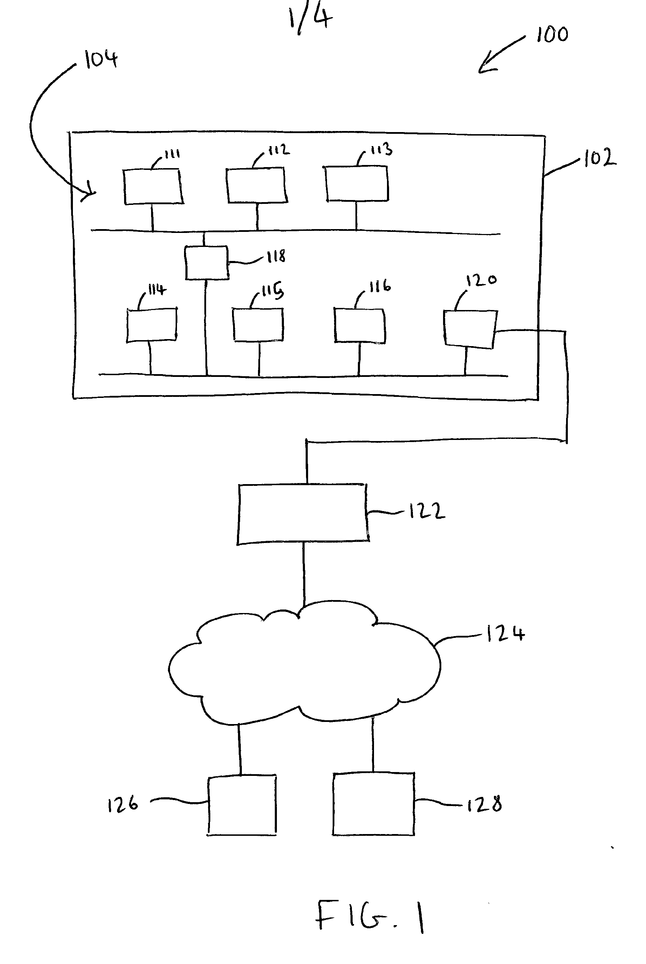

Figure 1 is a schematic illustration (not to scale) of an example system 100 in which an embodiment of a method of key management is implemented.

The system 100 comprises a car 102 having an on-board network 104 of interconnected digital electronic control units (ECUs), namely a first ECU 111, a second ECU 112, a third ECU 113, a fourth ECU 114, a fifth ECU 115, and a sixth ECU 116. The on-board network 104 further comprises a gateway module 118 and a key management module 120. The ECUs 111-116, the gateway module 118, and the key management module 120 are connected together such that data may be sent between those modules 111-120.

The on-board network 104 is in accordance with the Controller Area Network (CAN bus) vehicle bus standard or any other suitable network or interconnection technology.

The ECUs 111-116 are systems embedded in the car 102 that control one or more of the systems or subsystems in the car 102. Each ECU 111-116 may control a different respective set of systems or subsystems in the car 102. The ECUs 111-116 may be any appropriate ECUs. Examples of ECUs include, but are not limited to a door control unit, an engine control unit, an electric power steering control unit, a seat control unit, a speed control unit, a transmission control unit, a brake control unit, and ECUs for controlling entertainment systems on the car 102 such as a DAB radio.

In this embodiment, the ECUs 111-116 of the on-board network 104 are connected together to, in effect, form two separate sub-networks connected together by an optional gateway module 118. A first of these sub-networks comprises the first ECU 111, the second ECU 112, and the third ECU 113. A second of these sub-networks comprises the fourth ECU 114, the fifth ECU 115, the sixth ECU 116, and the key management module 120.

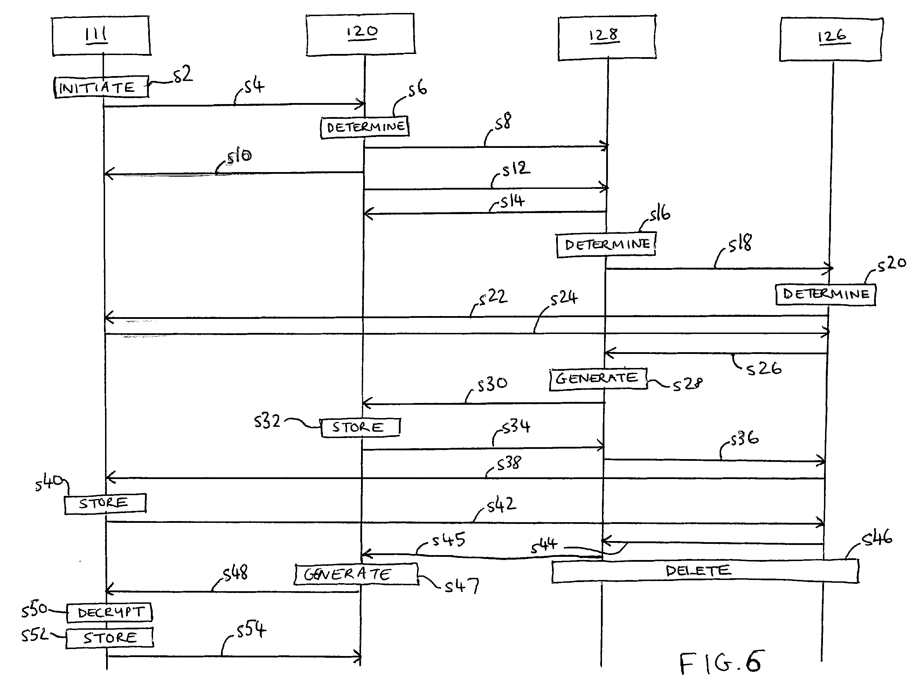

As described in more detail later below with reference to Figure 6, the key management module 120 manages cryptographic keys in the ECUs 111-116. In this embodiment, the key management module 120 is a dedicated unit of the network 104. However, in other embodiments, the functionality provided by the key management module 120 is provided by one or more other modules designed for some other purpose, such as one or more of the ECUs 111-116. In some embodiments, there are multiple key management modules.

Multiple networks advantageously tend to reduce traffic loading, and also to reduce cost if, for example, different ECUs use different data transmission speeds. For example, entertainment related ECUs may form a relatively lower speed sub-network, while ECUs relating to engine control may form a higher speed sub-network.

The system 100 further comprises a firewall 122, the Internet 124, a computer controlled or operated by a manufacturer of the ECUs 111-116 (hereinafter referred to as the "ECU manufacturer" and indicated in Figure 1 by the reference numeral 126), and a computer controlled or operated by a manufacturer of the key management module 120 (hereinafter referred to as the "key manager manufacturer" and indicated in Figure 1 by the reference numeral 128). Some ECUs and/or the key management module may be produced by the same manufacturer.

In this embodiment, the ECU manufacturer 126 comprises a computer controlled or operated by the manufacturer and/or supplier of the ECUs 111-116 on the car 102 or a third party representative of a manufacturer and/or supplier of the ECUs 111-116. In other embodiments, the ECU manufacturer 126 may be a different appropriate entity. In some embodiments, there are multiple different ECU manufacturers that are manufacturers and/or suppliers of different ECUs 111-116 on the car 102.

In this embodiment, the key manager manufacturer 128 comprises a computer controlled or operated by a manufacturer and/or supplier of the key management module 120 on the car 102. In other embodiments, the key manager manufacturer 128 may be a different appropriate entity. In some embodiments, the key manager manufacturer 128 is the same as the ECU manufacturer 126.

The key management module 120 is connected to the ECU manufacturer 126 and the key manager manufacturer 128 via the firewall 122 and the Internet 124 such that data may be sent between the key management module 120 and the ECU manufacturer 126 and the key manager manufacturer 128 via the firewall 122 and the Internet 124.

In this embodiment, the key management module 120 acts as a point of communication, or an interface, between the on-board network 104 and the network of manufacturers 126, 128.

The connection between the key management module 120 and the Internet 124 may be any appropriate connections, for example a wired connection, a wireless connection, or a combination of wired and wireless connections. For example, the connection between the key management module 120 and the Internet 124 may be physically implemented via hardware, or via a cellular telephone embedded in the car 102 (e.g. for use for emergency calls and/or as a Wi-Fi hotspot), or via a CAN bus diagnostics port connected to a smartphone via a Bluetooth or USB interface.

The firewall 122 advantageously tends to reduce or eliminate security risks to the car 102 arising from its connection to the Internet 124. In some embodiments, the firewall is located in the car 102, e.g. as part of the key management module 120.

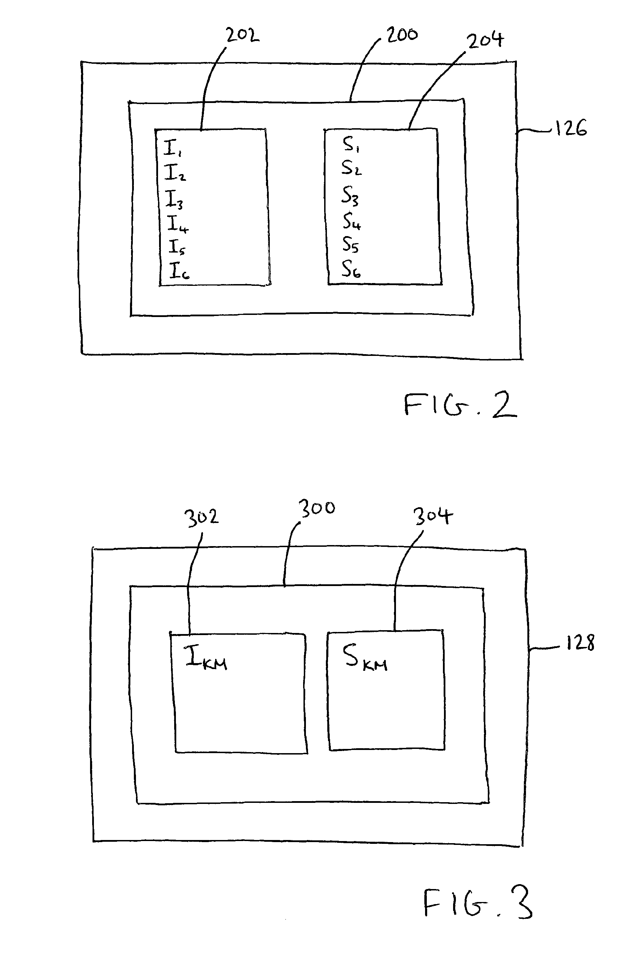

Figure 2 is a schematic illustration (not to scale) showing further details of the ECU manufacturer 126.

The ECU manufacturer 126 comprises a first database 200 in which is stored a first list of identifiers 202 and a first list of secret codes 204.

The first list of identifiers 202 comprises, for each ECU 111-116, a unique identifier for that ECU 111-116. The notation I₁ represents an identifier for the first ECU 111, I₂ represents an identifier for the second ECU 112, I₃ represents an identifier for the third ECU 113, and so on.

In this embodiment, for each ECU 111-116, during manufacture of that ECU 111-116, the identifier for that ECU is installed in that ECU and also recorded by the ECU manufacturer 126 in the first list of identifiers 202. The identifiers assigned to and installed in the ECUs 111-116 are not subsequently changed.

The first list of secret codes 204 comprises, for each ECU 111-116, a unique code for that ECU 111-116. The notation S₁ represents a secret code for the first ECU 111, S₂ represents a secret code for the second ECU 112, S₃ represents a secret code for the third ECU 113, and so on.

In this embodiment, for each ECU 111-116, during manufacture of that ECU 111-116, the secret code for that ECU is installed in that ECU and also recorded by the ECU manufacturer 126 in the first list of secret codes 204. The secret codes S₁-S₆ assigned to and installed in the ECUs 111-116 are not subsequently changed. Furthermore, in this embodiment, the secret codes S₁-S₆ are protected from unauthorised access on each module on which they are stored. Also, the secret codes S₁-S₆ are not revealed in messages between the modules in the system 100.

Figure 3 is a schematic illustration (not to scale) showing further details of the key manager manufacturer 128.

The key manager manufacturer 128 comprises a second database 300 in which is stored a second list of identifiers 302 and a second list of secret codes 304.

The second list of identifiers 302 comprises a unique identifier I_{KM} for the key management module 120.

In this embodiment, during manufacture of the key management module 120, the identifier I_{KM} for the key management module 120 is installed in the key management module 120 and also recorded by the key manager manufacturer 128 in the second list of identifiers 302. The identifier I_{KM} assigned to and installed in the key management module 120 is not subsequently changed.

The second list of secret codes 304 comprises a unique code S_{KM} for the key management module 120.

In this embodiment, during manufacture of the key management module 120, the secret code S_{KM} for the key management module 120 is installed in the key management module 120 and also recorded by the key manager manufacturer 128 in the second list of secret codes 304. The secret code S_{KM} assigned to and installed in the key management module 120 is not subsequently changed. Furthermore, in this embodiment, the secret code S_{KM} is protected from unauthorised access on each module on which it is stored. Also, the secret code S_{KM} is not revealed in messages between the modules in the system 100.

Preferably, the manufacturers 126, 128 secure their networks against attacks from over Internet 124 including, for example, attempts to exfiltrate the contents of their databases and denial of service attacks.

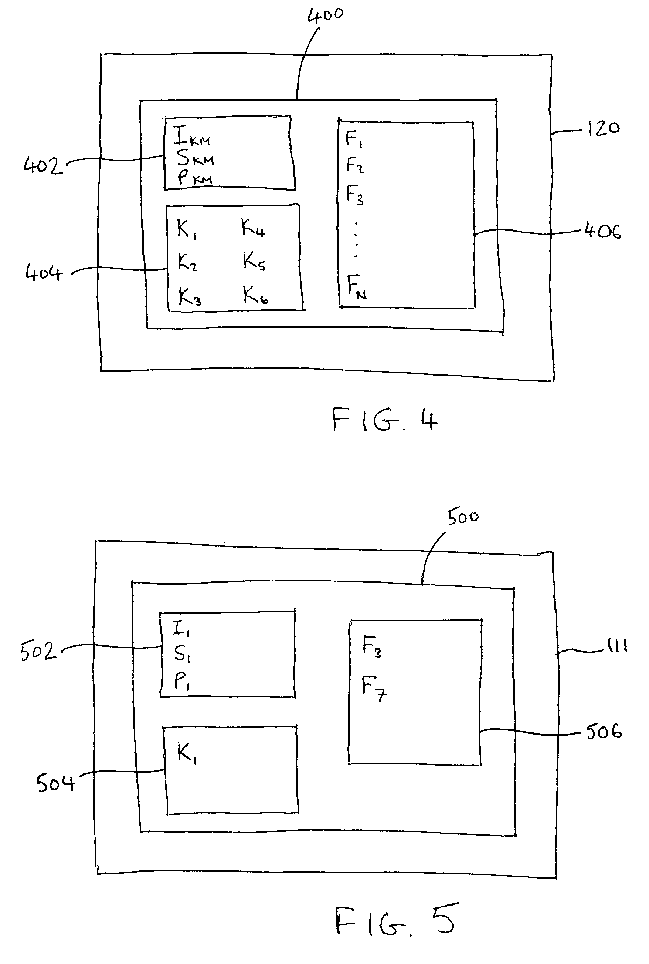

Figure 4 is a schematic illustration (not to scale) showing further details of the key management module 120.

The key management module 120 comprises a third database 400 in which is stored a key management module data list 402, a first list of keys 404, and a second list of keys 406.

The key management module data list 402 comprises the unique identifier I_{KM} for the key management module 120 which may be installed in the key management module 120 during manufacture, the secret code S_{KM} for the key management module 120 which may be installed in the key management module 120 during manufacture, and one or more parameters for the key management module 120 (represented by the notation P_{KM}). The one or more parameters P_{KM} may include any appropriate parameters relating to the key management module 120 including, but not limited to, a firmware version number.

In this embodiment, during manufacture of the key management module 120, the parameters P_{KM} of the key management module 120 are installed in the key management module 120. In this embodiment, the parameters P_{KM} installed in the key management module 120 are only changed as part of an authorised upgrade procedure. Furthermore, in this embodiment, the parameters P_{KM} are protected from unauthorised access on each module on which they are stored.

The first list of keys 404 comprises, for each ECU 111-116, a unique cryptographic key. The notation K₁ represents a key for communications between the key management module 120 and the first ECU 111, K₂ represents a key for communications between the key management module 120 and the second ECU 112, K₃ represents a key for communications between the key management module 120 and the third ECU 113, and so on. As described in more detail later below with reference to Figure 6, these cryptographic keys K₁, K₂, K₃, etc. are used to encrypt/decrypt and check the integrity of key distribution communications sent between the key management module 120 and the ECUs 111-116.

In this embodiment, as described in more detail later below with reference to Figure 6, the keys K₁-K₆ are installed on the key management module 120 and modified during a key management process. Furthermore, in this embodiment, the keys K₁-K₆ are protected from unauthorised access on each module on which they are stored. Also, the keys K₁-K₆ are not revealed in messages between the modules in the system 100.

The second list of keys 406 comprises, for each function performable by each of the ECUs 111-116, a unique cryptographic key. These keys may be used as an integrity check for communications between the modules of the network 104 (e.g. for command communications between the ECUs 111-116). These keys are hereinafter referred to as "function keys". Examples of functions performable by an ECU include, but are not limited to, a braking function performable by a brake control unit, a door open function performable by a door control unit, and a door lock function performable by a door control unit. The notation F₁ represents a function key corresponding to a first function, F₂ represents a function key corresponding to a second function, F₃ represents a function key corresponding to a third function, and so on.

In this embodiment, as described in more detail later below with reference to Figure 6, the function keys F₁, F₂, etc. are generated by the key management module 120 during a key management process. Furthermore, in this embodiment, the function keys are protected from unauthorised access on each module on which they are stored. Also, the function keys are not revealed in messages between the modules in the system 100.

Figure 5 is a schematic illustration (not to scale) showing further details of the first ECU 111.

The first ECU 111 comprises a fourth database 500 in which is stored an ECU data list 502, a third list of keys 504, and a fourth list of keys 506.

The ECU list 502 comprises the unique identifier I₁ for the first ECU 111 which may be installed in the first ECU 111 during manufacture, the secret code S₁ for the first ECU 111 which may be installed in the first ECU 111 during manufacture, and one or more parameters for the first ECU 111 (represented by the notation P₁). The one or more parameters P₁ may include any appropriate parameters relating to the first ECU 111 including, but not limited to, a firmware version number.

In this embodiment, during manufacture of the first ECU 111, the parameters P₁ of the first ECU 111 are installed in the first ECU 111. In this embodiment, the parameters P₁ installed in the first ECU 111 are only changed as part of an authorised upgrade procedure. Furthermore, in this embodiment, the parameters P₁ are protected from unauthorised access on each module on which they are stored.

The third list of keys 504 comprises the key K₁ for encrypting/decrypting communications between the key management module 120 and the first ECU 111.

In this embodiment, the key K₁ is installed on the first ECU 111 during a key management process, as described in more detail later below with reference to Figure 6.

The fourth list of keys 506 comprises a function key for each of the functions performable by the first ECU 111 or that the first ECU 111 may command a different ECU to perform. In this embodiment, the first ECU 111 includes the third and seventh function keys F₃, F₇ corresponding to functions performable by the first ECU 111.

In this embodiment, the function keys F₃, F₇ are installed on the first ECU 111 during a key management process, as described in more detail later below with reference to Figure 6.

In a similar way to that described above for the first ECU 111, the other ECUs, i.e. the second, third, fourth, fifth, and sixth ECUs 112-116 comprise respective relevant identifiers, secret codes, parameters, keys, and function keys. For example, the second ECU 112 comprises the identifier I₂, the secret key S₂, the parameters P₂, the key K₂, and the function keys for functions associated with the second ECU 112, and so on.

Apparatus, including the key management module 120, for implementing the above arrangement, and performing the method steps to be described later below, may be provided by configuring or adapting any suitable apparatus, for example one or more computers or other processing apparatus or processors, and/or providing additional modules. The apparatus may comprise a computer, a network of computers, or one or more processors, for implementing instructions and using data, including instructions and data in the form of a computer program or plurality of computer programs stored in or on a machine readable storage medium such as computer memory, a computer disk, ROM, PROM etc., or any combination of these or other storage media.

Figure 6 is process diagram showing certain steps of a key management process performable by the system 100.

The process depicted in Figure 6 is that of installing relevant cryptographic keys in the first ECU 111. A similar process may be performed to install keys in one or more of the other ECUs 112-116.

At step s2, the first ECU 111 initiates and determines that there are no keys or function keys stored in the fourth database 500. In other words, the first ECU 111 determines that the third and fourth lists of keys 504, 506 are empty.

At step s4, the first ECU 111 sends a first key request message (i.e. a request that keys are returned to the first ECU 111) to the key management module 120. The first key request message may include the identifier I₁ and parameters P₁ of the first ECU 111.

At step s6, using the first key request message, the key management module 120 determines that the first ECU 111 is an appropriate unit for the car 102, for example by determining that the first ECU 111 is not a duplicate of another unit that is known to be operational on the car 102.

In some embodiments, the key management module 120 may determine that the requesting ECU is not acceptable and may reject the key request and the key management process may end.

At step s8, the key management module 120 sends a second key request message to its manufacturer, i.e. the key manager manufacturer 128. The second key request message may include the identifier I₁ and parameters P₁ of the first ECU 111, and the identifier I_{KM} and parameters P_{KM} of the key management module 120. The second key request message may also include a first transaction identity generated by key management module 120 to avoid ambiguity in the event that several ECUs are being keyed concurrently.

At step s10, the key management module 120 sends a first response message to the first ECU 111 to inform the first ECU 111 that a key request has been accepted. The first response message may include the identifier I₁ for the first ECU 111.

At steps s12 and s14, an authentication operation is performed between the key management module 120 and the key manager manufacturer 128 to set parameters of the communications channel established between the key management module 120 and the key manager manufacturer 128 before normal communication over that channel begins. In this embodiment, the authentication operation generates a first session key which is known only to the protocol participants, i.e. the key management module 120 and the key manager manufacturer 128. This session key is used to provide confidentiality and integrity for the communication session between the key management module 120 and the key manager manufacturer 128. Any appropriate authentication protocol may be used for this handshaking operation including, but not limited to, an adaption of a cellular telephony authentication protocol.

In this embodiment, the authentication operation performed between the key management module 120 and the key manager manufacturer 128 uses the secret key S_{KM} known by the key management module 120 and the key manager manufacturer 128 to enable those modules 120, 128 to authenticate one another.

At step s16, having authenticated the key management module 120, the key manager manufacturer 128 determines whether or not the first ECU 111 is permitted within the car 102. For example, the key manager manufacturer 128 may check that the identifier I₁ corresponds to an authorised component and that the parameters P₁ correspond to an appropriate firmware version.

In this embodiment, the key manager manufacturer 128 determines that the first ECU 111 is permitted for use within the car 102. However, in situations in which the first ECU 111 is not permitted in the car 102, the key manager manufacturer 128 rejects the key request from the first ECU 111 and the key management process ends.

At step s18, the key manager manufacturer 128 sends third key request message to the ECU manufacturer 126. The third key request message may include the identifier I₁ and parameters P₁ of the first ECU 111, and the identifier I_{KM} and parameters P_{KM} of the key management module 120. The third key request message may also include a second transaction identity generated by key manager manufacturer 128 to avoid ambiguity in the event that several ECUs are being keyed concurrently.

In this embodiment, messages between the manufacturers 126, 128 are sent over secure connections. Such messages may be secured using, for example, IPsec.

At step s20, the ECU manufacturer 126 determines whether or not the first ECU 111 is permitted within the car 102. For example the ECU manufacturer 126 may check that first ECU 111 is not known to have been stolen or scrapped.

In this embodiment, the ECU manufacturer 126 determines that the first ECU 111 is permitted for use within the car 102. However, in situations in which the first ECU 111 is not permitted in the car 102, the ECU manufacturer 126 rejects the key request from the first ECU 111 and the key management process ends.

At steps s22 and s24, an authentication operation is performed between the ECU manufacturer 126 and first ECU 111 to set parameters of the communications channel established between the ECU manufacturer 126 and first ECU 111 before normal communication over that channel begins. In this embodiment, the authentication operation generates a second session key which is known only to the protocol participants, i.e. the ECU manufacturer 126 and first ECU 111. This session key is used to provide confidentiality and integrity for the communication session between the ECU manufacturer 126 and first ECU 111. Any appropriate authentication protocol may be used for this handshaking operation including, but not limited to, an adaption of a cellular telephony authentication protocol.

In this embodiment, the authentication operation performed between the ECU manufacturer 126 and first ECU 111 uses the secret key S₁ known by the

ECU manufacturer 126 and first ECU 111 to enable those modules 126, 111 to authenticate one another.

In this embodiment, messages sent between the ECU manufacturer 126 and first ECU 111 are sent via the key management module 120 and the key manager manufacturer 128.

At step s26, having authenticated the first ECU 111, the ECU manufacturer 126 sends a second response message to the key manager manufacturer 128 to inform the key manager manufacturer 128 that the first ECU 111 has been successfully authenticated. This second response message may include the second transaction identity.

At step s28, the key manager manufacturer 128 generates the key K₁ that is to be used to secure key management communications between key management module 120 and the first ECU 111 in the car 102. In this embodiment, the key K₁ is generated using a robust process so as to reduce or eliminate malicious parties guessing its value. Thus, in this embodiment, the key manager manufacturer 128 is a key source, or key generator. However, in other embodiments, a different entity may generate the key K₁.

At step s30, the key manager manufacturer 128 sends the generated key K₁ to the key management module 120. The key K₁ may be sent in a message that includes the first transaction identity. The key K₁ may be sent in a message that is encrypted and, optionally, integrity checked using the first session key.

At step s32, the key management module 120 stores the received key K₁.

At step s34, the key management module 120 sends a first confirmation message to the key manager manufacturer 128 to confirm that it has received the key K₁. The first confirmation message may include the first transaction identity. The first confirmation message may be encrypted and, optionally, integrity checked using the first session key.

At step s36, the key manager manufacturer 128 sends the generated key K₁ to the ECU manufacturer 126. The key K₁ may be sent in a message that includes the second transaction identity. The key K₁ may be sent over the secure connection between the manufacturers 126, 128.

At step s38, the ECU manufacturer 126 sends the generated key K₁ to the first ECU 111. The key K₁ may be sent in a message that is encrypted using the second session key. Thus, in this embodiment, the ECU manufacturer acts as an intermediary or an intermediate module between the key manager manufacturer 128 and the first ECU 111. However, in other embodiments, this is not the case.

At step s40, the first ECU 111 stores the received key K₁.

At step s42, first ECU 111 sends a second confirmation message to the ECU manufacturer 126 to confirm that it has received the key K₁. The second confirmation message may be encrypted using the second session key.

At step s44, the ECU manufacturer 126 sends a third confirmation message to the key manager manufacturer 128 to confirm that the first ECU 111 has received the key K₁. The third confirmation message may be sent in a message that includes the second transaction identity. The third confirmation message may be sent over the secure connection between the manufacturers 126, 128.

At step s45, the key manager manufacturer 128 sends a key generation message to the key management module 120 to trigger a function key generation operation (see step s47 below) at the right time. The key generation message may trigger the generation of one or more of the function keys once it is certain that step s40 has been completed. In some embodiments, the key generation message is protected using the first session key. In some embodiments, the key generation message comprises the first transaction identity.

At step s46, the manufacturers 126, 128 discard or delete their respective copies of the key K₁. At this stage, the key management module 120 and the first ECU 111 both possess the key K₁ that will be used to protect future key management communications between those modules. The Internet connection of the car 102 to the network of manufacturers 126, 128 may be severed.

At step s47, the key management module 120 generates function keys for the functions performable by the first ECU 111 (i.e. in this embodiment, the function keys F₃ and F₇). Thus, in this embodiment, the key management module 120 is a key source or key generator. If however the function keys have already been generated and installed in other ECUs then the key management module 120 may continue to use these keys. In some embodiments, a different entity other than the key management module 120 generates one or more of the function keys for the first ECU 111, for example, in some embodiments, the key manager manufacturer 128 may generate one or more of the function keys.

At step s48, the key management module 120 sends a key update message to the first ECU 111. In this embodiment, the key update message includes the function keys generated for the first ECU 111 (i.e. in this embodiment, the function keys F₃ and F₇) and the identifier I₁ for the first ECU 111. The key update message is encrypted and its integrity is checked using the key K₁.

At step s50, the first ECU 111 decrypts and checks the integrity of the key update message using the first key K₁.

At step s52, the first ECU 111 stores the received function keys F₃ and F₇.

At step s54, the first ECU 111 sends the sends a fourth confirmation message to the key management module 120 to confirm that it has received the function keys F₃ and F₇. The third confirmation message is encrypted and its integrity is checked using the key K₁.

Thus, the first ECU 111 is keyed for communicating with its authorised peer ECUs.

Thus, a key management process is provided.

The function keys F₁, F₂, etc. may be distributed to the relevant ECUs using the above described method such that each ECU 111-116 contains the function keys corresponding to functions that are performable by that ECU and the function keys corresponding to function that that ECU is authorised to command a different ECU to perform. These function keys may be used to verify the integrity and/or encrypt and decrypt instruction/command/information messages between the ECUs. For example, in some embodiments, the first ECU 111 and the second ECU 112 both contain the third function key F₃ that corresponds to a third function. The third function is performable by the first ECU 111. Also, the second ECU 112 is authorised to command the first ECU 111 to perform the third function. In operation, the second ECU 112 adds an integrity check, using the third function key F₃, to a message instructing the first ECU 111 to perform the third function, and sends that message to the first ECU 111. The first ECU 111 verifies the integrity check in the received message using its copy of the third function key F₃, thereby validating the command. The first ECU 111 then performs the third function.

An advantage provided by the above described system and method is that the ECUs on the car are installed with symmetric function keys securely and automatically. These keys may be used to validate that commands/information received by those ECUs are those that have been issued by an authorised entity. In the above embodiments, the car is connected to the Internet when an ECU is installed with the relevant keys. However, it tends to be possible to sever this Internet connection for normal operation of the car.

The above described system and method advantageously tends to overcome a weakness of conventional on-board networks which rely on mutual trust between ECUs. In such conventional networks, if, for example, a brake system receives a command over the network to brake then it is assumed to have come from the driver or some other authorised source such as an automated speed control system or a collision sensor. Hence if an entertainment system issues a spoofed brake command then it will be trusted and therefore carried out provided it satisfies any applied defensive checks (e.g. the braking force must be within design parameters).

The above described system and method is advantageously scalable compared to, for example, systems in which a firewall capability is added to the gateway to filter commands passing between ECU networks (e.g. to filter braking commands originating in the entertainment system so they are not forwarded to the safety critical system). The above described method and system tends to be scalable even if multiple levels of safety criticality are used, for example, to accommodate intermediate security levels such as windscreen demist control and physical security such as locks. Multiple security/safety levels tends to be supported by using an appropriate assignment of cryptographic keys.

In the above described system and method, cryptographic techniques are implemented so that, for example, a valid and a spoofed braking command can be distinguished from genuine commands.

Advantageously, authentication and integrity for commands and information is achieved.

Advantageously, in the above described system and method computation overheads are relatively low. Thus, the system and method tends to be particularly useful for real-time resource constrained systems such as those used in cars.

Advantageously, the above described system and method may be used to arrange certain of the car's systems have the same keys, which are different to the car's other systems. For example, it may be arranged that systems that are involved with braking possess the same function keys, and other systems do not. Thus, using the above described method and apparatus, authorised systems can insert integrity checks in messages and authorised recipients can verify those checks to verify the messages. These integrity checks may include a sequence number or timestamp to mitigate replay attacks. Unauthorised changes to messages or timestamps/sequence numbers may be detected as failed integrity checks, and replayed messages may be detected by invalid timestamps/sequence numbers.

In some conventional systems, identical secret keys are used in certain of the car's systems, for example all systems involved in braking. This tends to cause a number of problems. For example, if every braking unit in every car of a particular make/model is fitted with the same key then the probability of key compromise increases. If instead every car is fitted during manufacture with its own keyset, then problems with key installation arise when a braking unit needs to be replaced. If the cryptographic keys are handed to the car owner (e.g. on paper) then there is a risk of loss or theft. If the keys are available to the car manufacturer only, this restricts the ability of third parties to repair the car. Moreover cryptographic keys are typically large numbers that are difficult for humans to enter correctly, and many ECUs in cars are difficult to access and lack an effective user interface for key entry. The above described method and systems advantageously tends to solve these key management problems.

In some embodiments, when an ECU is removed from a vehicle and replaced by a new ECU, all the ECUs on that vehicle that used the function keys stored in the removed ECU may be deemed to be vulnerable to compromise. Also, in some embodiments, keys stored in non-volatile memory may be lost, e.g. due to strong electromagnetic interference. In these cases, it may be desirable to re-key the ECUs on the vehicle. The above described method and apparatus advantageously provides an efficient method for rekeying the on-board ECUs.

Advantageously, the combination of a trusted software state of the planned system in a car and integrity checks that mitigate attacks, such as through the DAB radio or via unauthorised additional components fitted, tends to lead to a high degree of trust in the overall electronic control system in a car. In some embodiments, additional functionality may be provided, for example in the key management module, that confirms the security posture of the car to third parties. For example, key management modules in different cars may communicate with each other and confirm the security in the respective cars to establish trust between the cars. Cooperative car to car communication may then be performed based on the established security.

Advantageously, the above described method and systems tend to provide integrity and authorisation for messages sent over networks in cars. The above described system and apparatus may be implemented to provide message confidentiality within the car, which offers potential benefits such as privacy and preventing intellectual property theft between different systems operating within the car.

Advantageously, the above described method and systems tend to mitigate message spoofing and replay attacks. This tends to provide additional benefits including, but not limited to, facilitating robust insurance data collection, driver state monitoring, and accident black box recorders.

Advantageously, the Internet and its interface need not be trusted. The above described system and method advantageously tends to provide end-to-end security between the car and the network of manufacturers.

It should be noted that certain of the process steps depicted in the flowchart of Figure 6 and described above may be omitted or such process steps may be performed in differing order to that presented above and shown in Figure 6. Furthermore, although all the process steps have, for convenience and ease of understanding, been depicted as discrete temporally-sequential steps, nevertheless some of the process steps may in fact be performed simultaneously or at least overlapping to some extent temporally.

In the above embodiments, the key management system and method is implemented for a car. However, in other embodiments, the key management system and method is implemented for a different type of entity, for example a different type of vehicle such as a bus, a lorry, a train, a ship, or an aircraft, or on a fleet of vehicles. In some embodiments, the key management system and method is implemented on a mechanical system, a building, or a plurality of buildings such as fairground rides, factories, oil platforms, etc. The above described system and method tends to be particularly useful when implemented in systems where public key cryptography is inconvenient, maintainers are not trained in key management techniques, and/or the ECUs have limited user interface capabilities.

In the above embodiments, the car is connected to the network of manufacturers via the Internet. However, in other embodiments, the car is connected to the network of manufacturers in a different way, for example, by a direct wired or wireless link, or via a different network of computers such as a local area network (LAN).

In the above embodiments, there are six ECUs on-board the car arranged as two separate sub-networks connected by a gateway module. However, in other embodiments there is a different number of ECUs. In some embodiments, the ECUs may be arranged differently, for example as a single network, or as more than two sub-networks. The sub-networks may be connected by more than one gateway module, or in a different way, for example, via a key management module that additionally acts as a gateway module.

In the above embodiments, there is a single unique key K₁, K₂, etc. for each of the ECUs. However, in other embodiments, two or more ECUs may share a common key. Also, in some embodiments, a single ECU may use multiple keys.

In the above embodiments, there is a single unique function key F₁, F₂, etc. for each of the ECU functions. However, in other embodiments, two or more functions may share a common function key. Also, in some embodiments, a single function may use multiple keys. For example, in some embodiments, finer resolution may be achieved using multiple function keys, for example a braking ECU may use different function keys for braking control and braking diagnostics respectively, as well as for different functions such as fuel control, heating control, navigation, etc. In some embodiments, both confidentiality and integrity may be provided by a single key, for example by implementing an AES (Advanced Encryption Standard) - GCM (Galois/Counter Mode of Operation) approach. In some embodiments a pair of keys may be used for the integrity and encryption operations.

In the above embodiments, the key management process is performed to transfer keys to an ECU that is empty (i.e. contains no keys or function keys). However, in some embodiments, an ECU may begin the key management process with one or more keys or function keys installed. In this case mutual authentication may be performed between that ECU and the key management module. In some embodiments, this handshake uses a key (K₁, K₂, etc.) known by that ECU and the key management module as a shared secret. This authentication tends to be able to detect cases such as when that ECU has been transferred to another car or a new key management module has been fitted to the car. If the key management module has been replaced with a new key management module, a key update procedure may be performed to update keys for all on-board ECUs. In embodiments in which the key management module is duplicated, the key management module may synchronise their key stores and thereby avoid rekeying the ECUs.

The security of communication offered by the above described method and systems may be dependent upon the strength of the security of the key storage on the ECUs and the key management module. In some embodiments, additional systems for improving this security may be implemented. Such additional systems may include, but are not limited to, physical anti-tamper devices, and memory management processes that store keys in a memory area that is only available to a trusted kernel part of the firmware that handles key management and message security. In a car with several levels of safety/security, ECUs with weaker security may be limited to the lower levels only.

In some embodiments, the security of the system is further improved by including in the trusted kernel on one or more of the ECUs a loader for the application firmware that checks the integrity of the firmware before executing it.

In some embodiments, firmware in the trusted kernel on one or more ECUs and/or gateways may be implemented to rate limit message transmissions. In some embodiments, the determine decisions (e.g. made in step s16) allow only ECUs with the highest of trust levels to run on the most availability critical networks. This advantageously tends to provide increased availability of ECU functionality and tends to mitigate against flooding attacks.

In the above embodiments, the manufacturer of the key management module generates the keys K₁, K₂, etc. for communications between the key management module and the ECUs. However, in other embodiments, one or more of the keys are generated by a different entity.

In the above embodiments, the key management module generates the function keys F₁, F₂, etc. for communications between modules in the on-board network. However, in other embodiments, one or more of the function keys are generated by a different entity, for example, the manufacturer of the key management module or some other manufacturer. Having an entity other than the key management module generate the keys tends to be beneficial in embodiments in which it is difficult to include robust key generation capability in the key management module.

In the above embodiments, symmetric key cryptographic techniques are implemented for key management. In other embodiments, a different technique may be used instead or in addition to the symmetric key cryptographic techniques. For example, public key cryptographic techniques could be implemented. For example, the above described method may be used to distribute private keys to the ECU for signing command/information messages. Corresponding public keys may be accessible, for example, from the key management module. In some embodiments, in operation, an authorised sender ECU may include a private key, and a corresponding public key may be accessible to other ECUs. The authorised sender ECU applies a digital signature to a command/information message using the authorised sender ECU's private key. This command message can be verified by a receiver using the authorised sender ECU's public key. This verification tends to ensure that the authorised sender ECU had access to the private key, and therefore is authorised to issue the command. This also tends to ensure that the message has not been tampered with, as any manipulation of the message will result in changes to the encoded message digest.

In some embodiments, the cryptographic keys for integrity checks are accompanied by sequence counters used to mitigate forms of replay attacks. In some embodiments timestamps may be used to mitigate forms of replay attacks. The counters may be associated with one or more of the secret codes, the keys, and/or the function keys. Counters, like keys, may be stored in nonvolatile memory so they retain their values when power is lost. Counters may be updated each time a message is generated and/or verified successfully.

In some embodiments the key management module performs one or more additional roles to those described above. For example, the key management module may synchronise the sequence numbers or timestamps used in integrity checks. The key management module may also manage the potential wrap/overflow of sequence numbers. The key management module may, if for example digital identities are embedded in the car itself (e.g. in the chassis, engine and other major components), use authentication protocols similar to those described above to ensure that the key management module and ECUs are only run in the intended car.

In the above embodiments, the ECUs are equipped with function keys that are used to create and/or verify integrity checks on messages. If an ECU receives a message with a verified integrity check then the message is typically accepted and processed. Failed integrity checks may be handled in any appropriate way. Examples of actions taken in the event of a failed integrity check include, but are not limited to, logging the incident and addressing safety considerations given that a valid message may have been lost.

## Claims

1. A cryptographic key distribution method for installing a cryptographic key in a vehicle electronic control unit (111), the method comprising:
establishing a first communication link between the electronic control unit (111) and a key source (128);
sending, via the first communication link, a first cryptographic key (K1) from the key source (128) to the electronic control unit (111);
establishing a second communication link between the key source (128) and a key management module (120);
sending, via the second communication link, the first cryptographic key (K1) from the key source (128) to the key management module (120);
encrypting, by the key management module (120), using the first cryptographic key (K1), a second cryptographic key (F3, F7);
sending, by the key management module (120), to the electronic control unit (111), the encrypted second cryptographic key (F3, F7); and
decrypting, by the electronic control unit (111), using the first cryptographic key (K1), the encrypted second cryptographic key (F3, F7), thereby providing the electronic control unit (111) with the second cryptographic key (F3, F7).

2. A cryptographic key distribution method according to claim 1, further comprising:
establishing a third communication link between a further electronic control unit (112-116) and a further key source (128);
sending, via the third communication link, a third cryptographic key (K2-K6) from the further key source (128) to the further electronic control unit (112-116);
establishing a fourth communication link between the further key source (128) and the key management module (120);
sending, via the fourth communication link, the third cryptographic key (K2-K6) from the key source (128) module to the key management module (120);
encrypting, by the key management module (120), using the third cryptographic key (K2-K6), the second cryptographic key (F3, F7);
sending, by the key management module (120), to the further electronic control unit (112-116), the encrypted second cryptographic key (F3, F7);
decrypting, by the electronic control unit (111), using the third cryptographic key (K2-K6), the encrypted second cryptographic key (F3, F7), thereby providing the further electronic control unit (112-116) with the second cryptographic key (F3, F7).

3. A cryptographic key distribution method according to claim 2, further comprising:
encrypting, using the second cryptographic key (F3, F7), by the electronic control unit (111), a message;
sending, by the electronic control unit (111), to the further electronic control unit (112-116), the encrypted message; and
decrypting, by the further electronic control unit (112-116), the encrypted message to recover the message.

4. A cryptographic key distribution method according to any of claims 1 to 3, wherein the method further comprises:
applying, using its second cryptographic key (F3, F7), by the electronic control unit (111), an integrity check to a message;
sending, by the electronic control unit (111), to a further electronic control unit (112-116), the message with the integrity check applied thereto; and
verifying, by the further electronic control unit (112-116), using its second cryptographic key (F3, F7), the integrity check so as to verify the message.

5. A cryptographic key distribution method according to any of claims 1 to 4, wherein:
the method further comprises applying, by the key management module (120), using its first cryptographic key (K1), to the second cryptographic key (F3, F7), an integrity check;
the step of sending, by the key management module (120), to the electronic control unit (111), the encrypted second cryptographic key (F3, F7) comprises sending, by the key management module (120), to the electronic control unit (111), the encrypted second cryptographic key (F3, F7) with the integrity check applied thereto; and
the method further comprises verifying, by the electronic control unit (111), using its first cryptographic key (K1), the integrity check so as to verify the second cryptographic key (F3, F7).

6. A cryptographic key distribution method according to any of claims 1 to 5, wherein
the electronic control unit (111) is located on a vehicle (102) and is configured to control or sense the state of one or more systems or subsystems of the vehicle (102); and
the second cryptographic key (F3, F7) is assigned only to a specific function performable by the electronic control unit (111) in controlling or sensing the state of the one or more electrical system or subsystems of the vehicle (102).

7. A cryptographic key distribution method according to claim 5 or 6, wherein the key management module (120) is located on the vehicle (102).

8. A cryptographic key distribution method according to any of claims 1 to 7, wherein:
the key source (128) and the key management module (120) are connected via one or more computer networks (124); and
establishing the second communication link between the key source (128) and the key management module (120) comprises performing an authentication operation between the key source (128) and the key management module (120) via the one or more computer networks (124).

9. A cryptographic key distribution method according to any of claims 1 to 8, wherein establishing the first communication link between the electronic control unit (111) and the key source (128), and sending, via the first communication link, the first cryptographic key (K1) from the key source (128) to the electronic control unit (111) comprises:
establishing a fifth communication link between the key source (128) and an intermediate module (126);
sending, via the fifth communication link, the first cryptographic key (K1) from the key source (128) to the intermediate module (126);
establishing a sixth communication link between the electronic control unit (111) and the intermediate module (126); and
sending, via the sixth communication link, the first cryptographic key (K1) from the intermediate module (126) to the electronic control unit (111).

10. A cryptographic key distribution method according to claims 9, wherein:
the electronic control unit (111) and the intermediate module (126) are connected via a one or more computer networks (124); and
establishing the sixth communication link between the electronic control unit (111) and the intermediate module (126) comprises performing an authentication operation between the electronic control unit (111) and the intermediate module (126) via the one or more computer networks (124).

11. A cryptographic key distribution method according to any of claims 1 to 10, further comprising generating, by the key management module (120), the second cryptographic key (F3, F7).

12. A cryptographic key distribution system comprising:
a vehicle electronic control unit (111);
a key source (128); and
a key management module (120); wherein
the electronic control unit (111) and a key source (128) are configured to establish a first communication link therebetween;
the key source (128) is configured to send, via the first communication link, a first cryptographic key (K1) to the electronic control unit (111);
the key source (128) and a key management module (120) are configured to establish a second communication link therebetween;
the key source (128) is configured to send, via the second communication link, the first cryptographic key (K1) to the key management module (120);
the key management module (120) is configured to encrypt, using the first cryptographic key (K1), a second cryptographic key (F3, F7);
the key management module (120) is configured to send, to the electronic control unit (111), the encrypted second cryptographic key (F3, F7); and
the electronic control unit (111) is configured to decrypt, using the first cryptographic key (K1), the encrypted second cryptographic key (F3, F7).

13. A vehicle (102) comprising:
an electronic control unit (111) configured to control or sense the state of a system or subsystem of the vehicle (102); and
a key management module (120); wherein
the electronic control unit (111) is configured to receive, from a key source (128) remote from the vehicle (102), a first cryptographic key (K1) via a first communication link established between the electronic control unit (111) and the key source (128);
the key management module (120) is configured to receive, from the key source (128), the first cryptographic key (K1) via a second communication link established between the key management module (120) and the key source (128);
the key management module (120) is configured to encrypt, using the first cryptographic key (K1), a second cryptographic key (F3, F7);
the key management module (120) is configured to send, to the electronic control unit (111), the encrypted second cryptographic key (F3, F7); and
the electronic control unit (111) is configured to decrypt, using the first cryptographic key (K1), the encrypted second cryptographic key (F3, F7).

14. A program or plurality of programs arranged such that when executed by a computer system or one or more processors it/they cause the computer system or the one or more processors to operate in accordance with the method of any of claims 1 to 12.

15. A machine readable storage medium storing a program or at least one of the plurality of programs according to claim 14.
